(19) Europäisches Patentamt / European Patent Office / Office européen des brevets

(11) **EP 4 390 480 A1**

(12) **DEMANDE DE BREVET EUROPEEN**

(43) Date de publication:
**26.06.2024 Bulletin 2024/26**

(21) Numéro de dépôt: **23216207.3**

(22) Date de dépôt: **13.12.2023**

(51) Classification Internationale des Brevets (IPC):
**G02B 6/12** (2006.01)    **G02B 6/125** (2006.01)
**G02B 27/01** (2006.01)

(52) Classification Coopérative des Brevets (CPC):
**G02B 6/12002; G02B 6/125; G02B 27/0172;**
G02B 2006/12104

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **19.12.2022 FR 2213726**

(71) Demandeur: **Commissariat à l'énergie atomique et aux énergies alternatives**
**75015 Paris (FR)**

(72) Inventeurs:
• **MILLARD, Kyllian**
**38054 Grenoble cedex 09 (FR)**
• **MARTINEZ, Christophe**
**38054 Grenoble cedex 09 (FR)**

(74) Mandataire: **Hautier IP**
**20, rue de la Liberté**
**06000 Nice (FR)**

(54) **DISPOSITIF DE RÉTRO-PROPAGATION MULTINIVEAUX**

(57)    L'invention porte sur un dispositif de rétrocouplage multiniveaux pour un rayonnement électromagnétique, comprenant au moins un premier niveau (n1) et un deuxième niveau (n2) au moins en partie superposés, le premier niveau comprenant un premier guide d'onde (11) destiné à guider une propagation du rayonnement lumineux selon un premier sens (s1) et le deuxième niveau comprenant un deuxième guide d'onde (21) destiné à guider la propagation du rayonnement lumineux selon un deuxième sens (s2) opposé au premier sens, le dispositif comprenant :
• une portion de couplage (3) dans laquelle les premier et deuxième guides d'onde sont couplés par rapprochement de sorte que le rayonnement électromagnétique se propage depuis le premier niveau (n1) vers le deuxième niveau (n2), et
• au moins un réflecteur (4) à une extrémité (30) de la portion de couplage (3), configuré pour réfléchir le rayonnement électromagnétique.

[Fig.3A]

FIG. 3A

**Description**

**DOMAINE TECHNIQUE**

Le domaine de l'invention est celui de la photonique intégrée. L'invention trouve pour application particulière un dispositif d'adressage compact pour un projecteur, notamment pour un projecteur rétinien.

**ETAT DE LA TECHNIQUE**

Un des enjeux actuels dans les domaines d'application liés à la photonique intégrée est le besoin toujours croissant d'intégration. Les avancées dans les télécommunications optiques ou les LiDARs requièrent des densités de composants toujours plus importantes sur des surfaces limitées. Pour augmenter la densité de circuits photoniques, la méthode la plus commune est de rapprocher les composants entre eux tout en empêchant le couplage parasite. Pour ce faire, il est possible d'optimiser le dimensionnement des composants ou la forme des composants. Il est également possible d'ajouter des structures entre les composants permettant de faire barrière au couplage parasite.

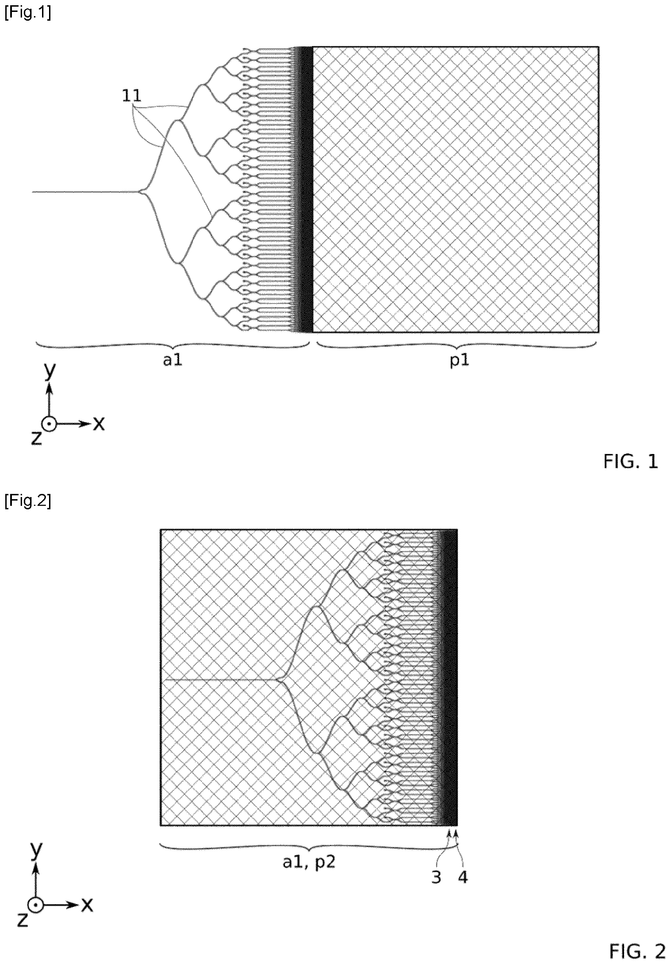

La figure 1 illustre une architecture photonique classique de projecteur, comprenant une partie d'adressage a1 accolée à une partie de projection p1. La partie d'adressage a1 comprend typiquement une pluralité de guides d'onde 11 issus d'un guide d'onde principal, par exemple au moyen d'un arbre équilibré d'interféromètres multimodes MMI (Multimode Interferometer). La partie de projection p1 comprend typiquement une distribution dense de guides d'onde (4096 guides sur la figure 1 qui ne sont pas visibles individuellement) en nitrure de silicium (Si3N4) à section rectangulaire, espacés de manière régulière.

Une telle architecture photonique occupe une surface importante de la puce ou du substrat. En particulier, la partie d'adressage a1 présente une surface non négligeable par rapport à celle de la partie de projection p1.

Il existe donc un besoin consistant à diminuer l'encombrement de telles architectures photoniques, de façon à libérer de la surface pour pouvoir intégrer davantage de composants et/ou densifier les systèmes photoniques. Un objectif de l'invention est de répondre à ce besoin.

En particulier, un objet de l'invention est un dispositif de rétro-propagation multiniveaux permettant de superposer différents niveaux de guides d'onde, par exemple un niveau d'adressage et un niveau de projection. Un autre objet de l'invention est un projecteur intégré comprenant un niveau d'adressage et un niveau de projection superposés.

Les autres objets, caractéristiques et avantages de la présente invention apparaîtront à l'examen de la description suivante et des dessins d'accompagnement. Il est entendu que d'autres avantages peuvent être incorporés.

**RESUME**

Pour atteindre cet objectif, selon un mode de réalisation on prévoit un dispositif de rétrocouplage multiniveaux pour un rayonnement lumineux, comprenant au moins un premier niveau s'étendant selon un premier plan et un deuxième niveau s'étendant selon un deuxième plan parallèle au premier plan, lesdits premier et deuxième niveaux étant au moins en partie superposés selon une direction normale aux premier et deuxième plans, le premier niveau comprenant au moins un premier guide d'onde destiné à guider une propagation du rayonnement lumineux selon un premier sens et le deuxième niveau comprenant au moins un deuxième guide d'onde destiné à guider la propagation du rayonnement lumineux selon un deuxième sens opposé au premier sens. Avantageusement le dispositif comprend :

- une portion de couplage dans laquelle les premier et deuxième guides d'onde sont couplés par rapprochement de sorte que le rayonnement électromagnétique se propage depuis le premier niveau vers le deuxième niveau, et
- au moins un réflecteur à une extrémité de la portion de couplage, configuré pour réfléchir le rayonnement électromagnétique.

Cela permet de superposer au moins deux niveaux comprenant des guides d'onde. L'architecture photonique classique de projecteur illustrée à la figure 1 peut ainsi être « repliée » comme illustrée à la figure 2. Le niveau de projection p2 situé sur le deuxième niveau est ici superposé au niveau d'adressage a1 situé sur le premier niveau. Sur la figure 2, le rayonnement lumineux se propage de la gauche vers la droite dans le niveau d'adressage a1 ; il est couplé au niveau de projection p2 dans la région de couplage 3, et réfléchi par le réflecteur 4 ; le rayonnement lumineux se propage de la droite vers la gauche dans le niveau de projection p2.

Le dispositif de rétrocouplage multiniveaux présente une compacité significativement améliorée. Cela permet avantageusement de diminuer l'encombrement d'une architecture photonique comprenant un tel dispositif de rétrocouplage multiniveaux.

Un autre aspect de l'invention concerne un système de projection optique comprenant un dispositif de rétrocouplage multiniveaux tel que décrit ci-dessus, dans lequel le deuxième niveau correspond à un niveau de projection.

Un tel système comprend en outre une électrode en-dessous du niveau de projection. Cette électrode, dite électrode inférieure, sert typiquement à activer des éléments d'extraction en surface du dispositif. L'activation peut notamment se faire par l'association d'une contre-électrode rapportée avec un composant disposé au-dessus du système de projection optique. L'activation se fait par exemple avec une couche de cristal liquide située entre l'électrode inférieure et la contre-électrode Cela permet d'extraire une partie du rayonnement lumineux guidé dans les guides d'onde du niveau de projection, en particulier lors de l'application d'une tension électrique entre l'électrode inférieure et la contre-électrode, dans le but d'émettre des points lumineux et d'afficher une image.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 illustre une architecture photonique classique de projecteur, selon l'art antérieur.
La figure 2 illustre une architecture photonique de projecteur, selon un mode de réalisation de la présente invention.
Les figures 3A et 3B illustrent schématiquement un dispositif de rétrocouplage multiniveaux selon un mode de réalisation de la présente invention, respectivement en vue de dessus et en coupe transverse.
La figure 4A illustre schématiquement en vue de dessus un dispositif de rétrocouplage multiniveaux selon un autre mode de réalisation de la présente invention.
Les figures 4B, 4C et 4D illustrent des résultats de simulation d'une propagation d'un rayonnement lumineux dans le dispositif de rétrocouplage multiniveaux illustré à la figure 4A, respectivement dans un plan xy1 du premier niveau n1, dans un plan xy2 du deuxième niveau n2, et dans un plan transverse xz.
Les figures 5A et 5B illustrent schématiquement deux variantes de réflecteurs formés par des miroirs de Bragg, selon des modes de réalisation de la présente invention.
La figure 6 présente des iso valeurs de largeur de bande passante (en nm) d'un miroir de Bragg en fonction de la longueur L du miroir (en $\mu$m) et de la perturbation d'indice $\Delta$n.
La figure 7 illustre schématiquement en vue de dessus un dispositif de rétrocouplage multiniveaux selon un autre mode de réalisation de la présente invention.
Les figures 8 à 12 illustrent des courbes de taux de rétrocouplage pour le dispositif illustré en figure 7, en fonction de la longueur de couplage et de la distance de rapprochement ds.
La figure 13 illustre les pertes optiques par absorption induite par une couche d'ITO en fonction de l'écart entre ladite couche d'ITO et un guide d'onde.
Les figures 14A et 14B illustrent schématiquement le positionnement d'une électrode dans un système optique comprenant un dispositif de rétrocouplage multiniveaux, selon un mode de réalisation de la présente invention.
Les figures 15A et 15B illustrent schématiquement le positionnement d'une électrode dans un système optique comprenant un dispositif de rétrocouplage multiniveaux, selon un autre mode de réalisation de la présente invention.
Les figures 16A et 16B illustrent schématiquement le positionnement d'une électrode dans un système optique comprenant un dispositif de rétrocouplage multiniveaux, selon un autre mode de réalisation de la présente invention.
La figure 17 illustre une architecture photonique de projecteur, selon un mode de réalisation de la présente invention.
La figure 18 illustre un dispositif de rétrocouplage multiniveaux dit RGB, comprenant des sous-niveaux dédiés à des rayonnements lumineux de différentes longueurs d'onde, selon un mode de réalisation de la présente invention.
Les figures 19A et 19B illustrent schématiquement un dispositif de rétrocouplage multiniveaux RGB selon un mode de réalisation de la présente invention, respectivement en vue de dessus et en coupe transverse.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs et/ou les dimensions des différentes couches, motifs et reliefs ne sont pas nécessairement représentatives de la réalité.

## DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le réflecteur est formé par une interruption des premier et deuxième guides d'onde dans un plan normal aux premier et deuxième sens de propagation.
Selon un exemple, le réflecteur est formé par un bloc interrompant les premier et deuxième guides d'onde, ledit bloc étant à base d'un matériau réfléchissant tel que l'aluminium. Un tel réflecteur n'est pas sélectif en longueurs d'onde. Il est avantageusement large bande. Un tel réflecteur peut donc être utilisé pour un grand nombre d'applications, par exemple dans le visible et dans l'infrarouge.

Selon un exemple, le bloc est formé par une couche métallique déposée en surface d'un plan qui coupe les premier et deuxième guides d'onde perpendiculairement à la direction de propagation. Cela peut se faire en réalisant une tranchée dont une paroi forme ce plan. Cette tranchée qui a la forme d'une cavité est typiquement recouverte d'une couche métallique par dépôt, typiquement entre 30 et 200 nm d'aluminium. La cavité n'est pas nécessairement remplie par le métal. La couche métallique sur la paroi de la cavité présente une épaisseur typiquement comprise entre 30 et 200 nm. Cela permet d'obtenir une bonne réflectivité pour le bloc réfléchissant. Selon un autre exemple, le bloc est formé à partir des étapes suivantes :

- Découper le dispositif au niveau de l'extrémité de la portion de couplage,
- Polir cette extrémité,
- Effectuer un dépôt métallique sur cette extrémité.

Selon un exemple, la portion de couplage présente une longueur Lc/2 selon une direction de propagation du rayonnement électromagnétique, Le étant la longueur de couplage caractéristique pour un transfert d'un mode de propagation du rayonnement électromagnétique du premier guide d'onde au deuxième guide d'onde. Ainsi, la portion de couplage est repliée sur elle-même grâce au réflecteur et présente une longueur qui correspond avantageusement à la moitié de la longueur de couplage caractéristique. Le couplage est ainsi plus compact.

Selon un exemple, le réflecteur est formé par un premier miroir de Bragg accolé au premier guide d'onde et par un deuxième miroir de Bragg accolé au deuxième guide d'onde, lesdits premier et deuxième miroirs de Bragg étant superposés selon la direction normale. Un tel réflecteur peut être facilement fabriqué par les procédés et technologies de la microélectronique. Il est également sélectif en longueurs d'onde. Cela permet par exemple de filtrer des rayonnements lumineux et/ou de créer des sous-niveaux dédiés à des rayonnements lumineux de différentes longueurs d'onde.

Selon un exemple, la portion de couplage présente une longueur Lc/2 - $\delta$ selon une direction de propagation du rayonnement électromagnétique, Le étant la longueur de couplage caractéristique pour un transfert d'un mode de propagation du rayonnement électromagnétique du premier guide d'onde au deuxième guide d'onde, et $\delta > 0$ étant une longueur de pénétration du mode dans les premier et deuxième miroirs de Bragg. La longueur de la portion de couplage est ici diminuée, du fait de la pénétration du mode de propagation dans le ou les miroirs de Bragg.

Selon un exemple, le premier niveau correspond à un niveau d'adressage et l'électrode inférieure est située en-dessous du niveau d'adressage. Cela permet de limiter ou de supprimer les phénomènes d'absorption liés à l'électrode inférieure.

Selon un exemple, le premier niveau correspond à un niveau d'adressage et l'électrode inférieure est située entre le niveau de projection et le niveau d'adressage. Cela permet de rapprocher l'électrode inférieure du niveau de projection. Cela permet de diminuer la tension à appliquer pour extraire le rayonnement lumineux.

Selon un exemple, le premier niveau correspond à un niveau intermédiaire et l'électrode inférieure est située au même niveau que le niveau intermédiaire, et le système comprend en outre un niveau d'adressage situé en-dessous de l'électrode inférieure et du niveau intermédiaire. Cela permet de diminuer les pertes optiques tout en diminuant la tension à appliquer pour extraire le rayonnement lumineux. Le recours à un niveau intermédiaire entre le niveau d'adressage et le niveau de projection permet en outre d'optimiser le couplage et de réduire la longueur de la portion de couplage.

Selon un exemple, l'au moins un premier niveau comprend un premier niveau d'adressage comprenant des guides d'onde configurés pour guider une propagation d'un premier rayonnement lumineux présentant une première longueur d'onde $\lambda 1$, un deuxième niveau d'adressage comprenant des guides d'onde configurés pour guider une propagation d'un deuxième rayonnement lumineux présentant une deuxième longueur d'onde $\lambda 2$, un troisième niveau d'adressage comprenant des guides d'onde configurés pour guider une propagation d'un troisième rayonnement lumineux présentant une troisième longueur d'onde $\lambda 3$. Cela permet de former par exemple un dispositif de rétrocouplage multiniveaux RGB (acronyme de « Red Green Blue ») ou un projecteur RGB.

Selon un exemple, le niveau de projection comprend des guides d'onde configurés pour guider respectivement les propagations des premier, deuxième et troisième rayonnements lumineux. La projection se fait ainsi depuis un seul et même niveau. Selon un exemple, les premier, deuxième et troisième niveaux d'adressage sont situés à des profondeurs dp1, dp2, dp3 différentes vis-à-vis du niveau de projection selon la direction normale. Cela permet d'optimiser la propagation des rayonnements lumineux de différentes longueurs d'onde, en limitant les pertes optiques par croisement entre les différents niveaux.

Selon un exemple, $\lambda 3 > \lambda 2 > \lambda 1$, et dp3 > dp2 > dp1.

Selon un exemple, le réflecteur comprend au moins un premier miroir de Bragg configuré pour réfléchir la première longueur d'onde $\lambda 1$, au moins un deuxième miroir de Bragg configuré pour réfléchir la deuxième longueur d'onde $\lambda 2$, et au moins un troisième miroir de Bragg configuré pour réfléchir la troisième longueur d'onde $\lambda 3$, lesdits premier, deuxième et troisième miroirs de Bragg étant situés à une même profondeur dp0 vis-à-vis du niveau de projection selon la direction normale.

Selon un exemple, les guides d'onde des premier, deuxième et troisième niveaux d'adressage sont optiquement reliés aux premier, deuxième et troisième miroirs de Bragg par au moins une portion de guide de profondeur intermédiaire dpmi (i=1...3) telle que dp3 < dpmi ≤ dp0.

Selon un exemple, les guides d'onde du premier niveau d'adressage sont accolés à l'au moins un premier miroir de Bragg sans portion de guide de profondeur intermédiaire et dp1 = dp0, les guides d'onde du deuxième niveau d'adressage sont reliés à l'au moins un deuxième miroir de Bragg par une portion de guide de profondeur intermédiaire dpm1 = dp0, les guides d'onde du troisième niveau d'adressage sont reliés à l'au moins un troisième miroir de Bragg par une portion de guide de profondeur intermédiaire dpm2 = dp2 et par une portion de guide de profondeur intermédiaire dpm3 = dp0.

Sauf incompatibilité, il est entendu que l'ensemble des caractéristiques optionnelles ci-dessus peuvent être combinées de façon à former un mode de réalisation qui n'est pas nécessairement illustré ou décrit. Un tel mode de réalisation n'est évidemment pas exclu de l'invention. Les caractéristiques et les avantages d'un aspect de l'invention, par exemple le dispositif ou le procédé, peuvent être adaptés *mutatis mutandis* à l'autre aspect de l'invention.

L'invention porte d'une manière générale sur un dispositif photonique de rétrocouplage multiniveaux. Le terme « rétrocouplage » désigne l'association des fonctions de couplage optique d'un mode de propagation d'un rayonnement lumineux, typiquement entre deux guides d'onde situés sur des niveaux d'altitude différente, et de rétro-propagation de ce rayonnement lumineux. Les premier et deuxième guides d'onde présentent chacun une portion de guidage uniquement destinée à guider le rayonnement lumineux respectivement selon un premier et un deuxième sens. Les premier et deuxième guides d'onde sont rapprochés au sein de la portion de couplage pour permettre le couplage évanescent entre lesdits premier et deuxième guides d'onde. Les premier et deuxième guides d'onde restent distincts et séparés dans la portion de couplage. Au sens de la présente invention, un « rapprochement » signifie que la distance de séparation entre les guides diminue, sans être nulle. Ainsi, les premier et deuxième guides d'onde ne sont pas parallèles entre eux sur toute leur longueur.

Dans ce qui suit, le terme « absorption » ou ses équivalents se réfère au phénomène par lequel l'énergie d'une onde électromagnétique est transformée en une autre forme d'énergie, par exemple par dissipation thermique. Dans la présente description, un matériau est considéré comme absorbant dès lors qu'il absorbe au moins 20% d'un rayonnement lumineux.

Dans ce qui suit, le terme « réflexion » ou ses équivalents se réfère au phénomène de réémission d'un rayonnement lumineux incident, depuis un élément ou une surface. Dans la présente description, un élément est considéré comme réfléchissant dès lors qu'il réémet une partie au moins d'un rayonnement lumineux incident, cette partie étant supérieure ou égale à 50%, de préférence cette partie étant supérieure ou égale à 80% du rayonnement lumineux incident.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un film, une couche, un élément structurel « à base » d'un matériau A, un substrat, un film, une couche, un élément structurel comprenant ce matériau A uniquement ou ce matériau A et éventuellement d'autres matériaux, par exemple des éléments dopants ou des éléments d'alliage.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Dans la présente demande de brevet, l'épaisseur, la hauteur ou la profondeur sont prises selon z. Les termes relatifs « sur », « surmonte », « sous », « sous-jacent » se réfèrent à des positions prises selon la direction z. La longueur est prise selon x et la largeur est prise selon y. Une dimension « latérale » correspond à une dimension selon une direction du plan xy. On entend par une extension « latérale » ou « latéralement », une extension selon une ou des directions du plan xy.

Un élément situé « à l'aplomb » ou « au droit d' » un autre élément signifie que ces deux éléments sont situés tous deux sur une même ligne perpendiculaire à un plan dans lequel s'étend principalement une face inférieure ou supérieure d'un substrat, c'est-à-dire sur une même ligne orientée verticalement sur les figures en coupe transverse.

La distance de séparation ds est typiquement prise de « centre à centre », entre les axes centraux des guides d'ondes.

Les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

Un principe de la présente invention consiste à mettre en oeuvre un couplage optique entre deux niveaux n1, n2 d'altitude différente selon z, ce couplage étant combiné à une réflexion de manière à changer le sens de propagation du rayonnement lumineux. Il est ainsi possible d'empiler et de superposer différents niveaux photoniques dans lesquels se propage le rayonnement lumineux. Typiquement, un deuxième niveau de projection p2 situé à une altitude n2 peut être superposé selon z à un premier niveau d'adressage a1 situé à une altitude n1, comme illustré à la figure 2.

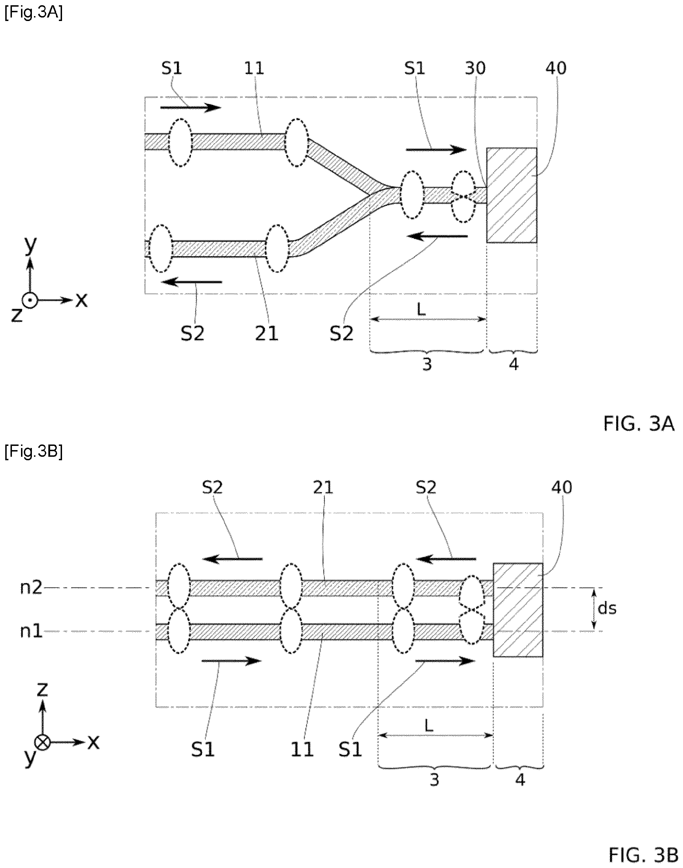

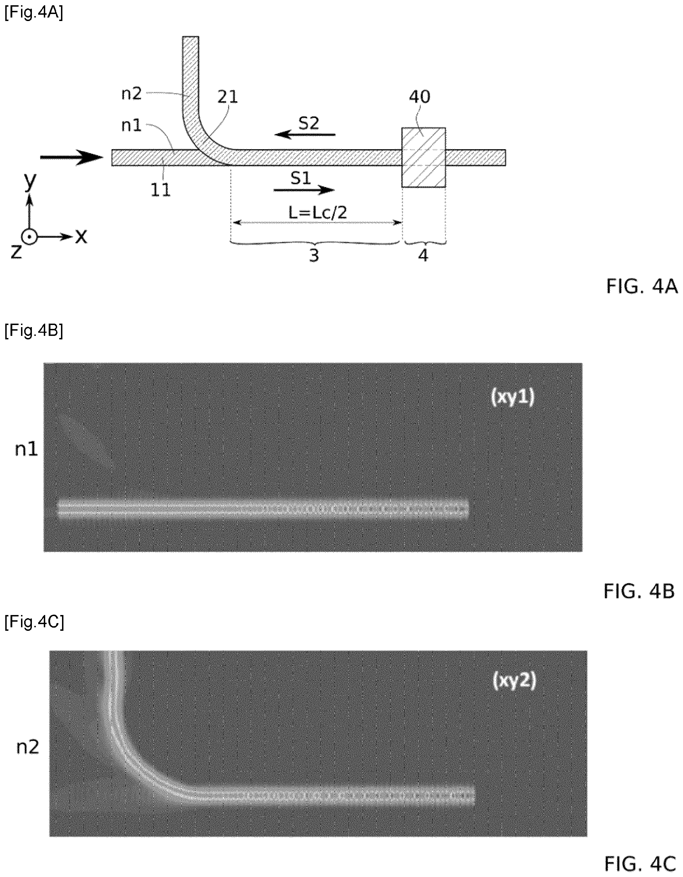

Comme illustré aux figures 3A et 3B, le dispositif comprend typiquement un premier guide d'onde 11 configuré pour guider la propagation d'un rayonnement lumineux selon un premier sens s1, et un deuxième guide d'onde 21 configuré pour guider la propagation du rayonnement lumineux selon un deuxième sens s2 opposé au premier sens s1. Le premier guide d'onde 11 est situé sur un premier niveau n1 présentant une altitude n1 selon z. Le deuxième guide d'onde 21 est situé sur un deuxième niveau n2 présentant une altitude n2 selon z. Le dispositif comprend une portion de couplage 3 au niveau de laquelle les premier et deuxième guides d'onde 11, 21 sont rapprochés et présentent une distance de séparation minimale ds permetttant un couplage optique, typiquement un couplage évanescent, entre le premier guide d'onde 11 et le deuxième guide d'onde 21. Cette portion de couplage 3 présente une longueur L selon x. A l'extrémité 30 de la portion de couplage 3, le dispositif comprend en outre un réflecteur 4 configuré pour réfléchir le rayonnement lumineux. Dans l'exemple illustré aux figures 3A, 3B, le réflecteur 4 est formé par une couche 40 à base d'un matériau réfléchissant, par exemple en aluminium. La figure 4A illustre un mode de réalisation du dispositif de rétrocouplage comprenant des guides 11, 21 en nitrure de silicium (Si3N4) présentant un indice de réfraction n=1,97 pour un rayonnement lumineux de longueur d'onde $\lambda$ = 532 nm. Les guides 11, 21 ont une largeur selon y de 300 nm et une épaisseur selon z de 200 nm. Les guides 11, 21 sont ainsi monomodes pour le rayonnement lumineux de longueur d'onde $\lambda$ = 532 nm. Le rayonnement lumineux se propage ainsi selon le mode optique fondamental au sein des guides 11, 21. Le principe de rétrocouplage selon l'invention peut cependant être mis en oeuvre pour différents modes de propagation, par exemple pour des modes de couplage secondaires.

Les guides 11, 21 sont superposés selon z au niveau de la portion de couplage 3. Le long de la portion de couplage 3, le mode optique fondamental peut se transférer d'un guide 11 à l'autre guide 21 par couplage évanescent, si les deux guides 11, 21 sont suffisamment proches l'un de l'autre sur une longueur suffisamment grande. La distance « suffisamment proche » est la distance de séparation minimale ds. La « longueur suffisamment grande » est appelée longueur de couplage Lc, et correspond à la longueur caractéristique nécessaire pour qu'un mode, typiquement le mode fondamental, soit transféré depuis le premier guide 11 vers le deuxième guide 21 en conservant son sens de propagation, c'est-à-dire en l'absence de perturbations le long du guide emprunté par le rayonnement lumineux. Ce transfert de mode sans modification du sens de propagation peut être classiquement effectué par un coupleur directionnel. Selon l'approche dite des super-modes, le mode transféré peut être vu comme la combinaison d'un mode symétrique et d'un mode antisymétrique sur les deux guides 11, 21. La longueur de couplage s'écrit alors :

$$[\text{Math1}] \quad L_c = \frac{\lambda}{2\Delta\text{n}}$$

avec $\Delta\text{n} = |n_{eff1} - n_{eff2}|$ qui correspond à la différence d'indices effectifs entre les modes symétrique et antisymétrique. Pour une distance de séparation ds de 550 nm entre le centre du premier guide et le centre du deuxième guide, la longueur de couplage Le est de l'ordre de 60 $\mu$m.

Dans le cas présent, un réflecteur 4, ici un bloc 40 sous forme de couche d'aluminium d'épaisseur 100 nm selon x, interrompt les guides 11, 21 à une extrémité de la portion de couplage 3. Le rayonnement lumineux emprunte ainsi la portion de couplage 3 une première fois dans le sens s1, puis une deuxième fois dans le sens s2. Pour ce mode de réalisation, la portion de couplage 3 présente une longueur L = Lc/2. Pour une distance de séparation ds de 550 nm entre le centre du premier guide et le centre du deuxième guide, la longueur L de la portion de couplage 3 est donc de l'ordre de 30 $\mu$m. La portion de couplage 3 de ce dispositif est ainsi deux fois plus compacte qu'un coupleur directionnel classique.

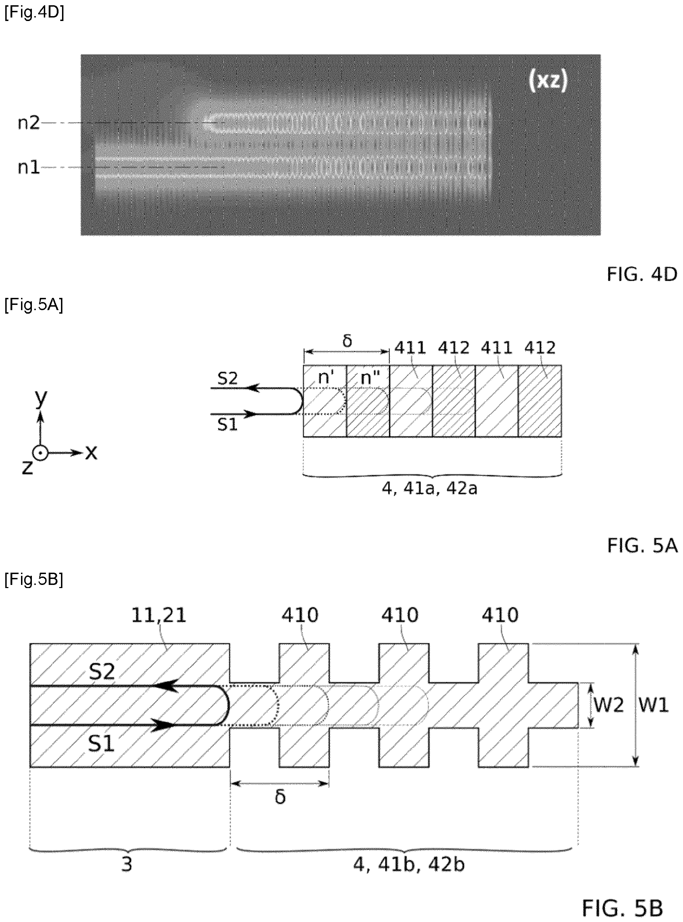

Les figures 4B, 4C et 4D illustrent des résultats de simulation FDTD (acronyme de « Finite Différence Time Domain » désignant une méthode de calcul de différences finies dans le domaine temporel) obtenus pour une propagation d'un rayonnement lumineux de longueur d'onde $\lambda$ = 532 nm dans le dispositif illustré à la figure 4A.

La figure 4B est une cartographie simulée du champ électromagnétique dans un plan xy1 correspondant au premier niveau n1. Il apparaît que le rayonnement lumineux incident se propage dans le premier guide 11 du premier niveau n1. La figure 4C est une cartographie simulée du champ électromagnétique dans un plan xy2 correspondant au deuxième niveau n2. Il apparaît que le rayonnement lumineux réfléchi se propage dans le deuxième guide 21 du deuxième niveau n2. La figure 4D est une cartographie simulée du champ électromagnétique dans un plan transverse xz. Il apparaît que le rayonnement lumineux se partage entre le premier guide 11 et le deuxième guide 21 à l'approche du réflecteur. Cela montre que le couplage et la rétro-propagation sont possibles en combinaison.

Sur la base de ces simulations numériques effectuées sur le dispositif de la figure 4A, un rétrocouplage maximal d'environ -0,68 dB (soit environ 87%) est obtenu.

Un tel dispositif peut être réalisé en créant une cavité au milieu d'un coupleur directionnel et en y faisant un dépôt métallique (d'aluminium par exemple ou un empilement de dépôt de titane/aluminium).

La portion de couplage 3 présentée sur la figure 4A peut être fabriquée par des procédés classiques de la microélectronique, typiquement par photolithographie puis par gravure d'une couche de Si3N4 déposée sur une couche d'oxyde créée par oxydation d'un substrat de silicium. Un masque et une étape de photolithographie/gravure sont mis en oeuvre pour chaque niveau de guide.

Le miroir métallique 40 peut être fait de différentes manières :

- en gravant une cavité à travers les guides et l'oxyde puis en procédant à une métallisation pour recouvrir la paroi de la cavité correspondant à l'extrémité de la portion de couplage. Un autre masque de photolithographie est alors mis en oeuvre pour former la cavité. Ce dernier masque ne requiert pas une grande résolution dimensionnelle. Il est donc avantageusement peu coûteux.
- en créant une cavité par faisceau d'ions focalisé FIB (acronyme de « Focused Ion Beam »)
- en formant la surface d'extrémité des guides par découpe puis polissage, puis en déposant un métal sur ladite surface

L'avantage d'utiliser un bloc 40 de métal en tant que réflecteur 4 est qu'il est peu sélectif en longueur d'onde. Un tel réflecteur 4 peut donc être utilisé pour un grand nombre d'applications dans les domaines du visible et de l'infrarouge.

Le réflecteur 4 peut également consister simplement en une interruption des guides 11, 21 par une découpe transversale du substrat. Cette découpe est réalisée comme précédemment par gravure d'une cavité ou découpe de la puce. Le contraste d'indices de réfraction $\Delta n = n_g - n_a$ entre le matériau de guidage des guides 11, 21 (typiquement $n_g = 2$) et l'air (indice $n_a = 1$) conduit à une réflexion voisine de 10 %. Cette valeur est faible pour une application de type dispositif de projection mais peut suffire pour d'autres applications (par exemple pour des capteurs). Elle offre l'avantage de ne pas nécessiter de dépôt métallique et d'être dépendante du milieu environnant (utile pour une application capteur).

Le réflecteur 4 peut aussi être réalisé par un empilement de couches de diélectrique d'indices de réfraction différents. Les couches peuvent être du SiO2 et du TiO2 avec un contraste d'indices qui approche l'unité. Le dimensionnement de cet empilement est similaire à celui des miroirs de Bragg décrits dans la suite. Le fort contraste d'indices permet de réduire fortement la longueur du miroir de Bragg équivalent, réduisant ainsi le nombre de couches de l'empilement (typiquement 10). La formation d'un tel empilement est moins coûteuse.

Les figures 5A et 5B illustrent des réflecteurs 4 alternatifs formés par des miroirs de Bragg. Les réflecteurs de Bragg sont très largement utilisés en photonique intégrée sur silicium. Ils sont facilement réalisables par les procédés classiques de la microélectronique.

La figure 5A illustre un premier mode de réalisation d'un miroir de Bragg 41a, 42a comprenant deux matériaux 411, 412 d'indices n', n" disposés en alternance le long de la direction de propagation du rayonnement lumineux. Les interfaces entre ces deux matériaux provoquent des réflexions successives de l'onde qui la pénètre. À chaque interface, une partie de l'onde est réfléchie, et l'autre transmise. Le mode de propagation du rayonnement lumineux pénètre ainsi dans le miroir de Bragg 41a, 42a selon une longueur de pénétration $\delta > 0$.

La figure 5B illustre un deuxième mode de réalisation d'un miroir de Bragg 41b, 42b obtenu par corrugation des flancs d'un guide d'onde 11, 21. Dans ce cas, les sections 410 de largeur w1 présentent un premier indice effectif et les sections étroites de largeur w2 présentent un deuxième indice effectif. Cela permet de recréer une succession d'interfaces du fait de la succession de deux indices effectifs différents. Le mode de propagation du rayonnement lumineux pénètre également dans le miroir de Bragg 41b, 42b selon une longueur de pénétration $\delta > 0$.

La longueur de pénétration $\delta$ peut être évaluée selon :

$$[\text{Math2}] \delta = \frac{\lambda}{2\Delta n} argcosh\left(\sqrt{e}\right)$$

Où $\lambda$ est la longueur d'onde, et $\Delta n$ le contraste d'indices $\Delta n = n' - n''$.

La réflectivité R du miroir de Bragg dépend de façon connue de la force du réseau $\kappa$ et de la longueur du réseau l définissant le miroir de Bragg, selon :

$$[\text{Math3}] R = \tanh^2 \kappa l$$

Une réflectivité R de 99,9 % correspond à un produit $\kappa l$ de l'ordre de 4,15 rad.

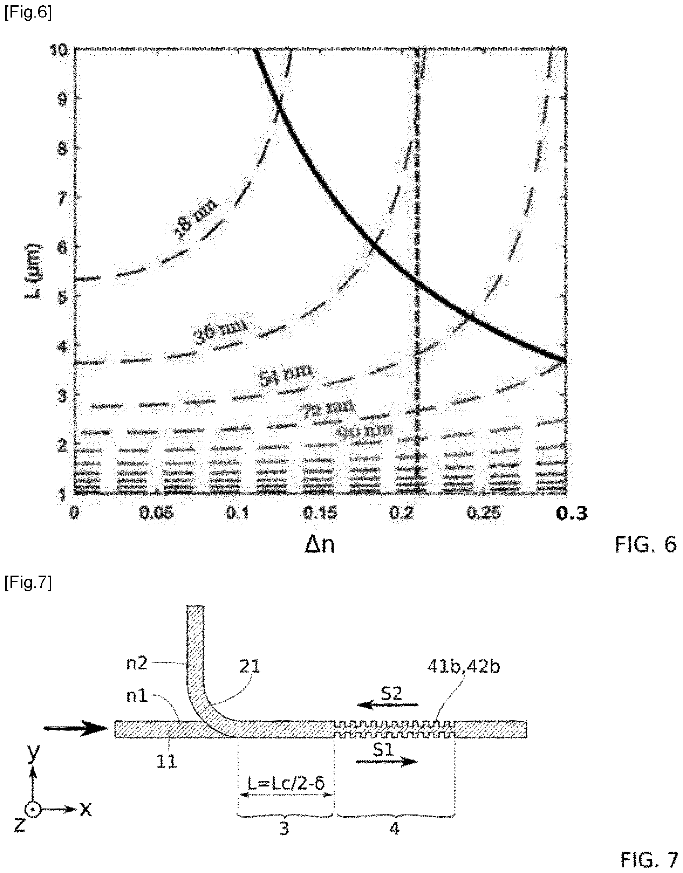

La bande passante $\Delta\lambda$ du miroir de Bragg dépend également de ces paramètres $\kappa$ et l. La figure 6 illustre différentes courbes isovaleurs de bande passante (18 nm, 36 nm, 54 nm...) en fonction de la longueur du réseau l et de la différence d'indices $\Delta n$ ($\kappa$ étant directement proportionnel à $\Delta n$). La courbe en trait continu correspond aux valeurs de l et $\Delta n$ donnant $\kappa l = 4,15$ rad pour une réflectivité théorique de 99,9%.

Pour un contraste d'indice $\Delta n \approx 0,22$ (correspondant à un guide d'onde en nitrure de silicium encapsulé dans de la silice) avec des corrugations de largeur $w2 = 75$ nm et de période $A \approx 170$ nm, une réflectivité d'environ 99,9% est atteinte pour une longueur l de r éseau de 5,13 $\mu$ m. La largeur de la bande passante est estimée dans ce cas à environ 54,5 nm.

La figure 7 illustre un mode de réalisation du dispositif de rétrocouplage comprenant des guides 11, 21 en nitrure de silicium (Si3N4) présentant une largeur selon y de 300 nm et une épaisseur selon z de 200 nm, et séparés par une distance de séparation ds de 550 nm, comme précédemment.

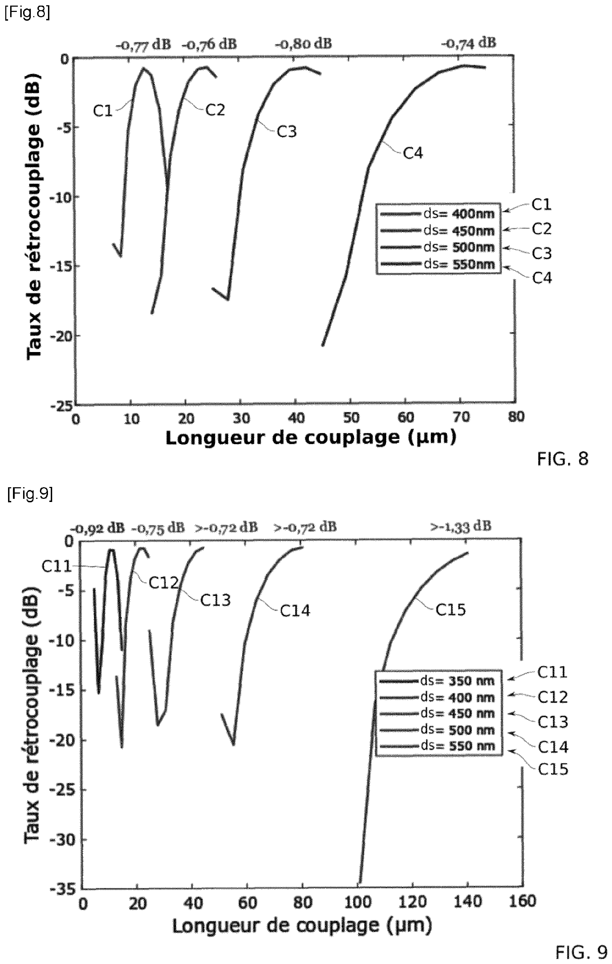

Dans ce mode de réalisation, le réflecteur 4 est formé par deux miroirs de Bragg 41b, 42b identiques superposés. Ici, la portion de couplage 3 présente une longueur $L = Lc/2 - \delta$ qui tient compte de la longueur de pénétration $\delta$ du rayonnement lumineux dans les miroirs de Bragg 41b, 42b. La figure 8 présente différentes courbes de puissance optique rétrocouplée, en fonction de la longueur de couplage L, pour différentes distances de séparation ds et pour une longueur d'onde de 532 nm. Pour chaque courbe, le deuxième maximum de rétrocouplage a été retenu. La courbe C1 est obtenue pour une distance de séparation ds de 400 nm entre le centre du premier guide et le centre du deuxième guide. La longueur L de la portion de couplage 3 correspondant au maximum de puissance rétrocouplée (-0,77 dB) est de l'ordre de 12 $\mu$m. La courbe C2 est obtenue pour une distance de séparation ds de 450 nm. La longueur L de la portion de couplage 3 correspondant au maximum de puissance rétrocouplée (-0,76 dB) est de l'ordre de 23 $\mu$m. La courbe C3 est obtenue pour une distance de séparation ds de 500 nm. La longueur L de la portion de couplage 3 correspondant au maximum de puissance rétrocouplée (-0,80 dB) est de l'ordre de 41 $\mu$m. La courbe C4 est obtenue pour une distance de séparation ds de 550 nm. La longueur L de la portion de couplage 3 correspondant au maximum de puissance rétrocouplée (-0,74 dB) est de l'ordre de 70 $\mu$m.

Le même type de courbes est illustré dans les figures 9 à 12 pour différentes longueurs d'onde.

La figure 9 et les courbes C11 ... C15 illustrent la puissance optique rétrocouplée, en fonction de la longueur de couplage L, pour différentes distances de séparation ds et pour une longueur d'onde de 450 nm. La courbe C11 est obtenue pour une distance de séparation ds de 350 nm. La courbe C12 est obtenue pour une distance de séparation ds de 400 nm. La courbe C13 est obtenue pour une distance de séparation ds de 450 nm. La courbe C14 est obtenue pour une distance de séparation ds de 500 nm. La courbe C15 est obtenue pour une distance de séparation ds de 550 nm. Le taux de rétrocouplage multiniveau est compris entre -1,33 dB (-73,6%) et au moins -0,72 dB (-84,7%) à $\lambda = 450$ nm.

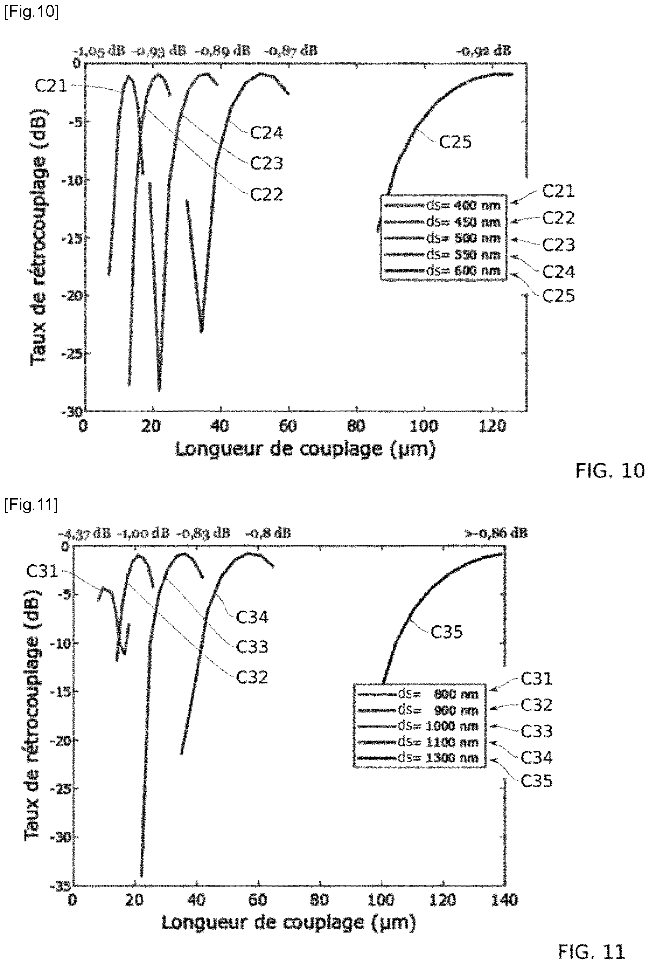

La figure 10 et les courbes C21...C25 illustrent la puissance optique rétrocouplée, en fonction de la longueur de couplage L, pour différentes distances de séparation ds et pour une longueur d'onde de 633 nm. La courbe C21 est obtenue pour une distance de séparation ds de 400 nm. La courbe C22 est obtenue pour une distance de séparation ds de 450 nm. La courbe C23 est obtenue pour une distance de séparation ds de 500 nm. La courbe C24 est obtenue pour une distance de séparation ds de 550 nm. La courbe C25 est obtenue pour une distance de séparation ds de 600 nm. Le taux de rétrocouplage multiniveau est compris entre -1,05 dB (-78,5%) et -0,87 dB (-81,9%) à $\lambda = 633$ nm.

La figure 11 et les courbes C31...C35 illustrent la puissance optique rétrocouplée, en fonction de la longueur de couplage L, pour différentes distances de séparation ds et pour une longueur d'onde de 1320 nm. La courbe C31 est obtenue pour une distance de séparation ds de 800 nm. La courbe C32 est obtenue pour une distance de séparation ds de 900 nm. La courbe C33 est obtenue pour une distance de séparation ds de 1000 nm.

La courbe C34 est obtenue pour une distance de séparation ds de 1100 nm. La courbe C35 est obtenue pour une distance de séparation ds de 1300 nm. Le taux de rétrocouplage multiniveau est compris entre -4,37 dB (-36,6%) et au moins -0,83 dB (-82,6%) à $\lambda = 1320$ nm. Ces résultats sont donnés à titre indicatif. Certaines valeurs, notamment la valeur -4,37 dB, peuvent être sous-évaluées, notamment au regard de l'échantillonnage des différentes courbes.

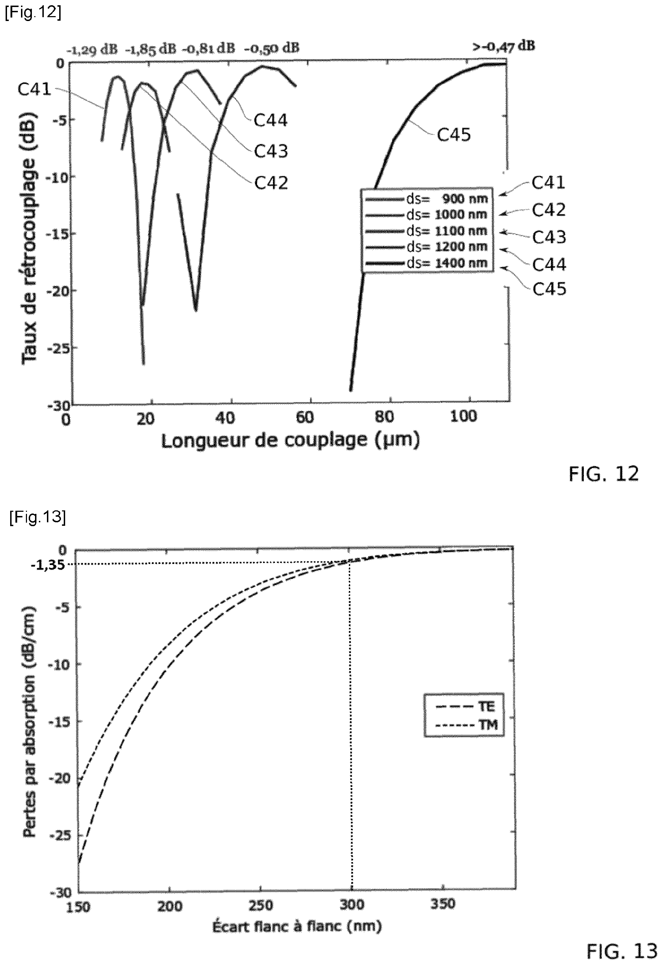

La figure 12 et les courbes C41...C45 illustrent la puissance optique rétrocouplée, en fonction de la longueur de couplage L, pour différentes distances de séparation ds et pour une longueur d'onde de 1550 nm. La courbe C41 est obtenue pour une distance de séparation ds de 900 nm. La courbe C42 est obtenue pour une distance de séparation ds de 1000 nm. La courbe C43 est obtenue pour une distance de séparation ds de 1100 nm.

La courbe C44 est obtenue pour une distance de séparation ds de 1200 nm. La courbe C45 est obtenue pour une distance de séparation ds de 1400 nm. Le taux de rétrocouplage multiniveau est compris entre -1,85 dB (-36,6%) et au moins -0,47 dB (-89,7%) à $\lambda = 1550$ nm.

De manière générale, le taux de rétrocouplage tend à augmenter lorsque la distance de séparation ds augmente. En effet, deux miroirs de Bragg positionnés trop proches l'un de l'autre peuvent interagir et générer des pertes optiques. Il est préférable d'utiliser des distances ds relativement grandes, pour faciliter la fabrication (robustesse du design). Une imprécision sur la longueur de couplage dans le design a en outre peu d'impact car les courbes de taux présentent sensiblement un plateau à leur maximum. Pour toutes les longueurs d'onde présentées, un taux de rétrocouplage simulé supérieur à 80% peut être obtenu pour au moins une distance de séparation ds. Les résultats optimaux obtenus par simulations sont résumés dans le tableau suivant :

Tableau 1

|  | λ = 450 nm | λ = 633 nm | λ = 1320 nm | λ = 1550 nm |
|---|---|---|---|---|
| distance ds (nm) | 450 | 550 | 1000 | 1200 |
| longueur de couplage L ($\mu$m) | 45 | 51,4 | 36,3 | 48,4 |
| taux de rétrocouplage (dB) | -0,72 | -0,87 | -0,83 | -0,5 |

Les guides d'ondes monomodes et les miroirs de Bragg sont typiquement redimensionnés pour chaque longueur d'onde. Les miroirs de Bragg optimisés (R = 99,9%) aux longueurs d'onde 450 nm, 633 nm, 1320 nm et 1550 nm présentent typiquement les paramètres regroupés dans le tableau suivant :

Tableau 2

| λ (nm) | 450 | 633 | 1320 | 1550 |
|---|---|---|---|---|
| Épaisseur (nm) | 200 | 200 | 500 | 600 |
| Largeur w1 (nm) | 220 | 400 | 750 | 900 |
| Période Λ (nm) | 143 | 204 | 420 | 490 |
| Longueur l ($\mu$m) | 4,4 | 6,4 | 12,0 | 13,8 |
| Largeur w2 (nm) | 55 | 100 | 260 | 330 |
| Δλ estimé (nm) | 45,6 | 62,4 | 143,3 | 171,9 |

Il est possible d'optimiser encore les miroirs de Bragg en augmentant la force du réseau. Augmenter la force du réseau permet d'augmenter la réflectivité du miroir de Bragg et d'élargir la bande passante, ce qui rend le miroir de Bragg encore plus robuste en longueur d'onde.

Le dispositif de rétrocouplage multiniveaux peut être avantageusement mis en oeuvre dans le cadre d'un système de projection optique, par exemple un afficheur intégré pour la projection rétinienne. Pour réaliser un tel système de projection, un niveau de projection est superposé à un niveau d'adressage. Le niveau de projection correspond ici au deuxième niveau du dispositif de rétrocouplage multiniveaux, et le niveau d'adressage correspond au premier niveau du dispositif de rétrocouplage multiniveaux. Pour extraire la lumière depuis le niveau de projection, le système comprend en outre une électrode en-dessous du niveau de projection, dite électrode inférieure. Cette électrode inférieure est typiquement associée à une contre-électrode ou électrode supérieure, généralement sous forme de grille, rapportée par un second dispositif, par exemple à cristaux liquides. L'électrode inférieure et/ou la contre-électrode sont de préférence à base d'oxyde d'indium étain (ITO). L'électrode inférieure est typiquement positionnée ni trop loin de la grille de contre-électrode pour éviter des chutes de potentiel trop élevées, ni trop proche de la grille de contre-électrode pour éviter des pertes optiques par absorption. Pour évaluer les pertes optiques liées à la position de l'électrode inférieure, on considérera qu'une électrode à base d'ITO située à 300 nm d'un guide d'onde induit une perte par absorption de -1,35 dB/cm. Ces pertes décroissent exponentiellement lorsque l'écart entre la couche d'ITO et le guide d'onde augmente, comme illustré à la figue 13.

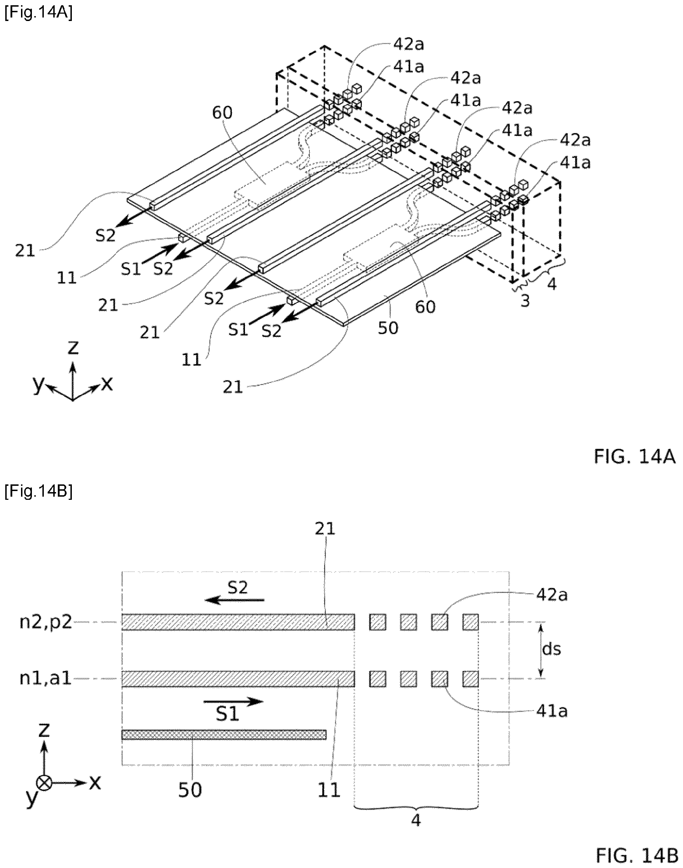

Les figures 14A, 14B illustrent un premier mode de réalisation du système de projection dans lequel l'électrode inférieure 50 est positionnée sous le deuxième niveau n2 de projection p2 et sous le premier niveau n1 d'adressage a1. Cela permet de limiter ou supprimer les pertes optiques par absorption au sein de l'ITO.

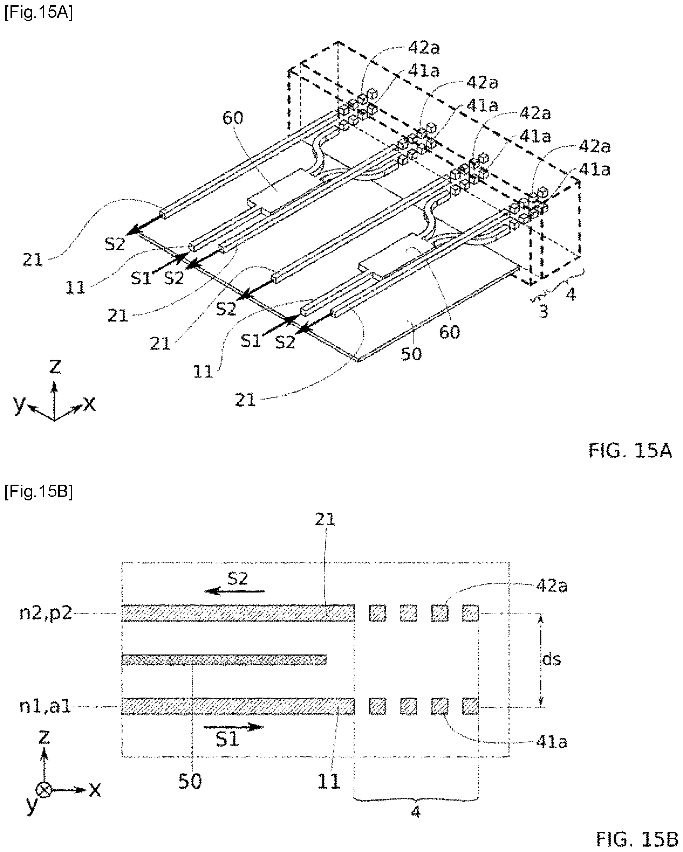

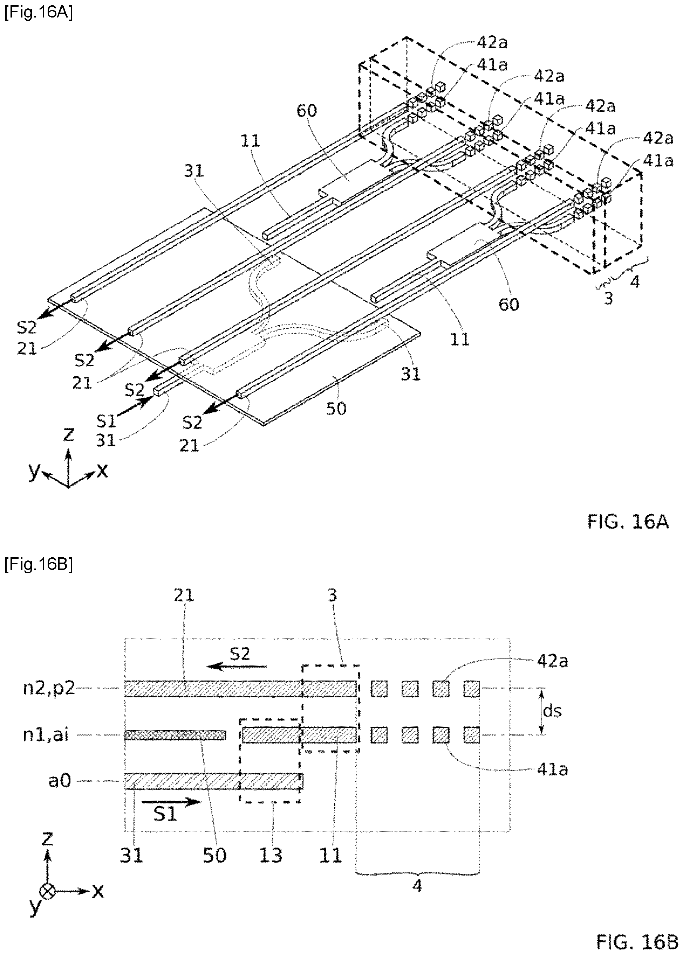

Le niveau d'adressage a1 comprend des guides d'onde 11 typiquement subdivisés par l'intermédiaire d'interféromètres multimodes MMI 60. Selon un exemple, le rayonnement lumineux se répartit ainsi de manière équilibrée sur un total de 4096 guides. Les guides d'onde 11 débouchent sur des réflecteurs de Bragg 41a. Le niveau de projection p2 comprend des guides d'onde 21 en partie à l'aplomb des guides d'onde 11 dans la portion de couplage 3. Les guides d'onde 21 sont accolés à des réflecteurs de Bragg 42a. Les réflecteurs de Bragg 42a sont superposés selon z aux réflecteurs de Bragg 41a. Lorsque le rayonnement lumineux est injecté dans les guides d'onde 11 en direction des réflecteurs de Bragg 41a, selon le sens S1, il est réfléchi et injecté par couplage dans les guides d'onde 21, selon le sens S2 opposé à S1. Il est ensuite extrait du niveau de projection en appliquant une tension entre les électrodes d'extraction, c'est-à-dire entre l'électrode inférieure et l'électrode supérieure. En superposant les niveaux d'adressage et de projection, ce système de projection est avantageusement compact. Le premier mode de réalisation du système de projection permet typiquement de limiter les pertes optiques. Plus la distance entre les deux électrodes d'extraction augmente, plus la tension à appliquer pour extraire le rayonnement lumineux augmente. Cela affecte le rendement énergétique d'un projecteur intégré. Les modes de réalisation du système de projection illustrés aux figures 15A, 15B et 16A, 16B visent à diminuer la tension nécessaire à appliquer sur les électrodes pour extraire le rayonnement lumineux. Les éléments décrits et référencés pour le premier mode de réalisation sont également transposables aux deux modes de réalisation suivants.

Les figures 15A, 15B illustrent un deuxième mode de réalisation du système de projection dans lequel l'électrode inférieure 50 est positionnée entre le deuxième niveau n2 de projection p2 et le premier niveau n1 d'adressage a1. Cela permet de rapprocher l'électrode inférieure 50 de la surface du projecteur au voisinage de laquelle se trouve la contre-électrode. La tension d'extraction est ainsi diminuée. Pour limiter les pertes optiques par absorption dues à l'électrode inférieure 50, la distance de séparation ds entre les premier et deuxième niveaux n1, n2 est augmentée. Selon un exemple, ds $\geq$ 850 nm. La longueur de couplage de la portion de couplage 3 est augmentée en conséquence. Cela affecte la compacité du système. Le deuxième mode de réalisation du système de projection permet typiquement une consommation électrique modérée.

Les figures 16A, 16B illustrent un troisième mode de réalisation du système de projection dans lequel l'électrode inférieure 50 est positionnée au même niveau qu'un niveau n1 intermédiaire désigné ai. L'électrode inférieure 50 est positionnée au-dessus d'un niveau d'adressage a0, et en-dessous du niveau de projection p2. Dans ce mode de réalisation, le niveau d'adressage a0 comprend des guides d'onde 31 sans réflecteurs. Le niveau intermédiaire ai comprend des guides d'onde 11 débouchant sur des réflecteurs de Bragg 41a. Le niveau de projection p2 comprend des guides d'onde 12 accolés à des réflecteurs de Bragg 42a. Le rayonnement lumineux est ici injecté dans les guides d'onde 31 du niveau d'adressage a0, selon le sens S1. Il est ensuite injecté par couplage 13 dans les guides d'onde 11, selon le sens S1. Il est ensuite réfléchi et injecté par couplage dans les guides d'onde 21, selon le sens S2 comme précédemment. Il est ensuite extrait du niveau de projection en appliquant une tension entre les électrodes d'extraction.

Le niveau intermédiaire ai permet de faire un pont optique entre le niveau d'adressage a0 et le niveau de projection p2. La distance de séparation ds peut par exemple être réduite à 450 nm. Cela permet de réduire drastiquement la longueur des portions de couplage 13, 3. Une simulation par éléments finis des modes propres FDE (Finite Difference Eigenmode) indique qu'une longueur de couplage Le pour la portion de couplage 3 de l'ordre de 20,6 $\mu$m convient. La compacité du système est préservée. Grâce au niveau intermédiaire ai, les guides 31 peuvent être éloignés de l'électrode inférieure 50. Cela permet de limiter ou supprimer les pertes optiques par absorption. Les guides 31 sont également relativement plus éloignés des guides 21. Cela permet de limiter ou supprimer les pertes optiques par croisements multiniveaux. Les pertes optiques pour ce troisième mode de réalisation sont comparables à celles induites dans le premier mode de réalisation. La tension d'extraction est en outre diminuée avec ce positionnement d'électrode 50, par rapport au premier mode de réalisation. Le troisième mode de réalisation du système de projection est un bon compromis permettant de combiner de faibles pertes optiques et une consommation électrique modérée. Sa mise en oeuvre est plus coûteuse que les mises en oeuvre des premier et deuxième modes de réalisation. Sur les figures 16A, 16B, les miroirs de Bragg 41a, 42a sont associés respectivement au niveau intermédiaire ai et au niveau de projection p2. D'autres associations ou configurations sont envisageables. Les miroirs de Bragg 41a, 42a peuvent notamment être associés respectivement au niveau d'adressage a0 et au niveau intermédiaire ai.

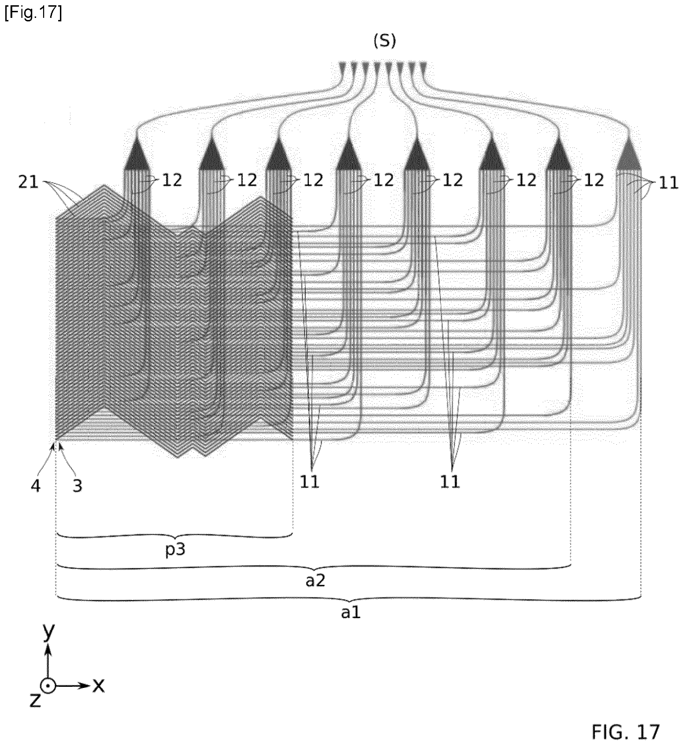

La figure 17 illustre une architecture photonique de projecteur comprenant deux niveaux d'adressage ou de routage a1, a2, et un niveau de projection p3. Celle-ci permet, à partir de quelques sources lumineuses (S), d'adresser des points d'émission répartis arbitrairement sur la surface d'un projecteur rétinien dont les guides 21 ont des formes de « zigzag » pour donner aux points d'émission une distribution aléatoire.

La partie de routage comprend des guides d'ondes 11, 12 respectivement sur deux niveaux, pour éviter les croisements de guides. Cela permet de limiter les pertes optiques. La partie de projection est située sur un troisième niveau. Le dispositif de rétrocouplage 3, 4 permet avantageusement de superposer le niveau de projection p3 sur les niveaux d'adressage a1, a2.

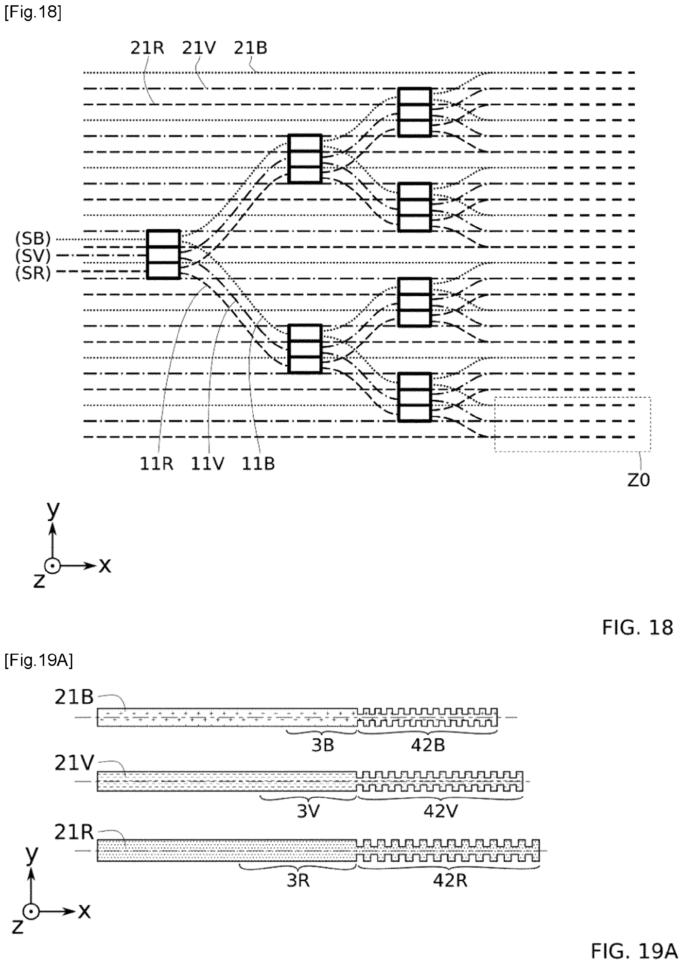

La figure 18 illustre un dispositif de rétrocouplage multiniveaux dit RGB (acronyme de « Red Green Blue »), comprenant des sous-niveaux dédiés à des rayonnements lumineux de différentes longueurs d'onde (par exemple le rouge, le vert, le bleu). Ce dispositif comprend typiquement des guides d'ondes 11R configurés pour guider une première longueur d'onde $\lambda$1 (par exemple $\lambda$1 = 633 nm), des guides d'ondes 11V configurés pour guider une deuxième longueur d'onde $\lambda$2 (par exemple $\lambda$2 = 532 nm), et des guides d'ondes 11B configurés pour guider une troisième longueur d'onde $\lambda$3 (par exemple $\lambda$3 = 450 nm). Les guides d'ondes 11R, 11V, 11B sont typiquement situés sur des niveaux différents. Le dispositif comprend en outre des guides d'ondes 21R, 21V, 21B respectivement configurés pour guider les première, deuxième et troisième longueurs d'onde $\lambda$1, $\lambda$2, $\lambda$3. Les guides d'ondes 21R, 21V, 21B sont typiquement situés sur le même niveau, par exemple un niveau de projection d'un projecteur RGB.

Les différents rayonnements lumineux guidés par les guides d'ondes 11R, 11V, 11B se propagent par rétrocouplage dans les guides d'ondes 21R, 21V, 21B. La zone Z0 illustrée à la figure 18 correspond à cette zone de rétrocouplage.

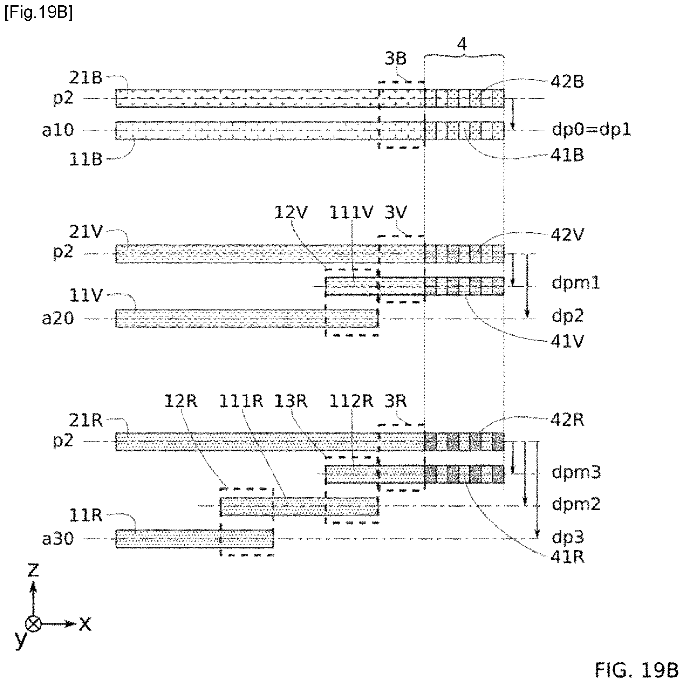

Les figures 19A et 19B illustrent de façon plus détaillée cette zone de rétrocouplage. Les guides d'ondes 11R, 21R configurés pour guider la longueur d'onde λ1 sont typiquement dimensionnés différemment des guides d'ondes 11V, 21V configurés pour guider la longueur d'onde λ2, et différemment des guides d'ondes 11B, 21B configurés pour guider la longueur d'onde λ3. Les rétrocoupleurs sont ainsi spécifiques aux différentes longueurs d'onde λ1, λ2, λ3. Les guides 11R, 21R présentent une portion de couplage 3R et un réflecteur 41R, 42R. Les guides 11V, 21V présentent une portion de couplage 3V et un réflecteur 41V, 42V. Les guides 11B, 21B présentent une portion de couplage 3B et un réflecteur 41B, 42B.

Plus la longueur d'onde est petite, plus le mode de propagation du rayonnement lumineux correspondant est confiné au sein du guide. Ainsi, pour un couplage effectif, la distance de séparation selon z entre les guides 11B, 21B est relativement plus petite que la distance de séparation selon z entre les guides 11V, 21V, et la distance de séparation selon z entre les guides 11V, 21V est relativement plus petite que la distance de séparation selon z entre les guides 11R, 21R. Ainsi, le niveau d'adressage a30 comprenant les guides 11R est le plus profond vis-à-vis du niveau de projection p2 comprenant les guides 21R. Le niveau d'adressage a10 comprenant les guides 11B est le moins profond vis-à-vis du niveau de projection p2 comprenant les guides 21B. Les niveaux d'adressage a30, a20, a10 présentent respectivement des profondeurs dp3, dp2, dp1 vis-à-vis du niveau de projection p2, telles que dp3 > dp2 > dp1.

Selon une possibilité, les niveaux d'adressage a30, a20 les plus profonds peuvent recourir à des portions de guide de profondeurs intermédiaires pour acheminer le rayonnement lumineux jusqu'au niveau de projection p2.

Comme illustré à la figure 19B, le guide 11V du niveau d'adressage a20 peut être d'abord couplé à une portion de guide 111V de profondeur intermédiaire dpm1. Un pont de couplage vertical 12V permet ainsi au rayonnement lumineux de longueur d'onde λ2 de passer du guide 11V à la portion de guide 111V, puis d'être injecté dans le guide 21V par rétrocouplage via la portion de couplage 3V et les réflecteurs 41V, 42V.

Le guide 11R du niveau d'adressage a30 peut être d'abord couplé à une portion de guide 111R de profondeur intermédiaire dpm2. Cette portion de guide 111R peut être également couplée à une portion de guide 112R de profondeur intermédiaire dpm3. Deux ponts de couplage vertical 12R, 13R permettent ainsi au rayonnement lumineux de longueur d'onde λ1 de passer du guide 11R à la portion de guide 112R, puis d'être injecté dans le guide 21R par rétrocouplage via la portion de couplage 3R et les réflecteurs 41R, 42R. Les différents niveaux de guides et de portions de guide peuvent ainsi former des escaliers pour optimiser le couplage et/ou limiter les pertes optiques. Selon une possibilité, dpm2 = dp2 et dpm3 = dpm1 = dp1. Les différents niveaux de guides et de portions de guide sont ainsi plus faciles à réaliser par dépôts et structurations de couches successives.

Au vu de la description qui précède, il apparaît clairement que le dispositif et le système proposés offrent une solution particulièrement efficace pour améliorer la compacité d'un système de photonique intégrée. L'invention n'est pas limitée aux modes de réalisations précédemment décrits.

## Revendications

1.   Dispositif de rétrocouplage multiniveaux pour un rayonnement lumineux, comprenant au moins un premier niveau (n1) s'étendant selon un premier plan (xy1) et un deuxième niveau (n2) s'étendant selon un deuxième plan (xy2) parallèle au premier plan (xy1), lesdits premier et deuxième niveaux étant au moins en partie superposés selon une direction normale (z) aux premier et deuxième plans (xy1, xy2), le premier niveau comprenant au moins un premier guide d'onde (11) destiné à guider une propagation du rayonnement lumineux selon un premier sens (s1) et le deuxième niveau comprenant au moins un deuxième guide d'onde (21) destiné à guider la propagation du rayonnement lumineux selon un deuxième sens (s2) opposé au premier sens, le dispositif comprenant :

     • une portion de couplage (3) dans laquelle les premier et deuxième guides d'onde sont couplés par rapprochement de sorte que le rayonnement lumineux se propage depuis le premier niveau (n1) vers le deuxième niveau (n2) par couplage évanescent, et
     • au moins un réflecteur (4) à une extrémité (30) de la portion de couplage (3), configuré pour réfléchir le rayonnement lumineux.

2.   Dispositif selon la revendication précédente dans lequel le réflecteur (4) est formé par une interruption des premier et deuxième guides d'onde (11, 21) dans un plan (xz) normal aux premier et deuxième sens (S1, S2) de propagation.

3.   Dispositif selon la revendication 1 dans lequel le réflecteur (4) est formé par un bloc (40) interrompant les premier et deuxième guides d'onde (11, 21), ledit bloc (40) étant à base d'un matériau réfléchissant tel que l'aluminium.

4.   Dispositif selon l'une quelconque des revendications précédentes dans lequel la portion de couplage (3) présente une longueur L = Lc/2 selon une direction de propagation du rayonnement lumineux, Lc étant la longueur de couplage caractéristique pour un transfert d'un mode de propagation du rayonnement lumineux du premier guide d'onde (11) au deuxième guide d'onde (21).

5. Dispositif selon la revendication 1 dans lequel le réflecteur (4) est formé par un premier miroir de Bragg (41a, 41b) accolé au premier guide d'onde (11) et par un deuxième miroir de Bragg (42a, 42b) accolé au deuxième guide d'onde (21), lesdits premier et deuxième miroirs de Bragg étant superposés selon la direction normale (z).

6. Dispositif selon la revendication précédente dans lequel la portion de couplage (3) présente une longueur L = Lc/2 - δ selon une direction de propagation du rayonnement lumineux, Le étant la longueur de couplage caractéristique pour un transfert d'un mode de propagation du rayonnement lumineux du premier guide d'onde (11) au deuxième guide d'onde (21), et δ > 0 étant une longueur de pénétration du mode dans les premier et deuxième miroirs de Bragg.

7. Système de projection optique comprenant un dispositif de rétrocouplage multiniveaux selon l'une quelconque des revendications précédentes, dans lequel le deuxième niveau (n2) correspond à un niveau de projection (p2), ledit système comprenant en outre une électrode (50), dite électrode inférieure, en-dessous du niveau de projection (p2).

8. Système selon la revendication précédente dans lequel le premier niveau (n1) correspond à un niveau d'adressage (a1) et l'électrode inférieure (50) est située en-dessous du niveau d'adressage (a1).

9. Système selon la revendication 7 dans lequel le premier niveau (n1) correspond à un niveau d'adressage (a1) et l'électrode inférieure (50) est située entre le niveau de projection (p2) et le niveau d'adressage (a1).

10. Système selon la revendication 7 dans lequel le premier niveau (n1) correspond à un niveau intermédiaire (ai) et l'électrode inférieure (50) est située au même niveau (n1) que le niveau intermédiaire (ai), le système comprenant en outre un niveau d'adressage (a0) situé en-dessous de l'électrode inférieure (50) et du niveau intermédiaire (ai).

11. Système selon l'une quelconque des revendications 7 à 10 dans lequel l'au moins un premier niveau (n1) comprend un premier niveau d'adressage (a10) comprenant des guides d'onde (11B) configurés pour guider une propagation d'un premier rayonnement lumineux présentant une première longueur d'onde λ1, un deuxième niveau d'adressage (a20) comprenant des guides d'onde (11V) configurés pour guider une propagation d'un deuxième rayonnement lumineux présentant une deuxième longueur d'onde λ2, un troisième niveau d'adressage (a30) comprenant des guides d'onde (11R) configurés pour guider une propagation d'un troisième rayonnement lumineux présentant une troisième longueur d'onde λ3, et dans lequel le niveau de projection (p2) comprend des guides d'onde (21B, 21V, 21R) configurés pour guider respectivement les propagations des premier, deuxième et troisième rayonnements lumineux, lesdits premier, deuxième et troisième niveaux d'adressage (a10, a20, a30) étant situés à des profondeurs dp1, dp2, dp3 différentes vis-à-vis du niveau de projection (p2) selon la direction normale (z).

12. Système selon la revendication précédente dans lequel λ3 > λ2 > λ1, et dp3 > dp2 > dp1.

13. Système selon l'une quelconque des deux revendications précédentes dans lequel le réflecteur (4) comprend au moins un premier miroir de Bragg (41B) configuré pour réfléchir la première longueur d'onde λ1, au moins un deuxième miroir de Bragg (41V) configuré pour réfléchir la deuxième longueur d'onde λ2, et au moins un troisième miroir de Bragg (41R) configuré pour réfléchir la troisième longueur d'onde λ3, lesdits premier, deuxième et troisième miroirs de Bragg (41B, 41V, 41R) étant situés à une même profondeur dp0 vis-à-vis du niveau de projection (p2) selon la direction normale (z), et dans lequel les guides d'onde (11B, 11V, 11R) des premier, deuxième et troisième niveaux d'adressage (a10, a20, a30) sont optiquement reliés aux premier, deuxième et troisième miroirs de Bragg (41B, 41V, 41R) par au moins une portion (111V, 111R, 112R) de guide de profondeur intermédiaire dpmi (i=1 ... 3) telle que dp3 > dpmi ≥ dp0.

14. Système (10) selon la revendication précédente dans lequel les guides d'onde (11B) du premier niveau d'adressage (a10) sont accolés à l'au moins un premier miroir de Bragg sans portion de guide de profondeur intermédiaire et dp1 = dp0, les guides d'onde (11V) du deuxième niveau d'adressage (a20) sont reliés à l'au moins un deuxième miroir de Bragg par une portion (111V) de guide de profondeur intermédiaire dpm1 = dp0, les guides d'onde (11R) du troisième niveau d'adressage (a30) sont reliés à l'au moins un troisième miroir de Bragg par une portion (111R) de guide de profondeur intermédiaire dpm2 = dp2 et par une portion (112R) de guide de profondeur intermédiaire dpm3 = dp0.

EP 4 390 480 A1

[Fig.1]

FIG. 1

[Fig.2]

FIG. 2

13

[Fig.3A]

FIG. 3A

[Fig.3B]

FIG. 3B

[Fig.4A]

FIG. 4A

[Fig.4B]

FIG. 4B

[Fig.4C]

FIG. 4C

[Fig.4D]

FIG. 4D

[Fig.5A]

FIG. 5A

[Fig.5B]

FIG. 5B

[Fig.6]

FIG. 6

[Fig.7]

FIG. 7

[Fig.8]

FIG. 8

[Fig.9]

FIG. 9

[Fig.10]

FIG. 10

[Fig.11]

FIG. 11

[Fig.12]

FIG. 12

[Fig.13]

FIG. 13

[Fig.14A]

FIG. 14A

[Fig.14B]

FIG. 14B

EP 4 390 480 A1

[Fig.15A]

FIG. 15A

[Fig.15B]

FIG. 15B

[Fig.16A]

FIG. 16A

[Fig.16B]

FIG. 16B

[Fig.17]

(S)

21

12    12    12    12    12    12    12    11

11         11

4    3

p3

a2

a1

y
z ⊙ → x

FIG. 17

[Fig.18]

FIG. 18

[Fig.19A]

FIG. 19A

[Fig.19B]

FIG. 19B

Europäisches
Patentamt

European
Patent Office

Office européen
des brevets

# RAPPORT DE RECHERCHE EUROPEENNE

Numéro de la demande

**EP 23 21 6207**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2022/098709 A1 (FACEBOOK TECH LLC [US]) 12 mai 2022 (2022-05-12) | 1-12 | INV. G02B6/12 |
| A | * alinéas [0047] - [0058] *<br>* figures 1A, 1B, 4 * | 13,14 | G02B6/125<br>G02B27/01 |
| X | EP 3 945 365 A1 (FACEBOOK TECH LLC [US]) 2 février 2022 (2022-02-02) | 1-12 | |
| A | * alinéas [0062] - [0066] *<br>* figures 9A-C, 10 * | 13,14 | |
| A | MARTINEZ CHRISTOPHE ET AL: "See-through holographic retinal projection display concept",<br>OPTICA<br>,<br>vol. 5, no. 10<br>20 octobre 2018 (2018-10-20), page 1200,<br>XP055942106,<br>US<br>ISSN: 2334-2536, DOI:<br>10.1364/OPTICA.5.001200<br>Extrait de l'Internet:<br>URL:http://dx.doi.org/10.1364/OPTICA.5.001200<br>* figure 3 * | 1-14 | DOMAINES TECHNIQUES RECHERCHES (IPC)<br><br>G02B |
| A | US 2020/096779 A1 (TELFER STEPHEN J [US] ET AL) 26 mars 2020 (2020-03-26)<br>* alinéas [0090] - [0093] *<br>* figures 6, 7A * | 1-14 | |
| A | WO 2022/120250 A1 (FACEBOOK TECH LLC [US]) 9 juin 2022 (2022-06-09)<br>* alinéa [0078] *<br>* figure 5A * | 1-14 | |

Le présent rapport a été établi pour toutes les revendications

| Lieu de la recherche | Date d'achèvement de la recherche | Examinateur |
|---|---|---|
| La Haye | 10 avril 2024 | Hohmann, Leander |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**EP 4 390 480 A1**

## ANNEXE AU RAPPORT DE RECHERCHE EUROPEENNE
## RELATIF A LA DEMANDE DE BREVET EUROPEEN NO.

EP 23 21 6207

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-04-2024

| Document brevet cité au rapport de recherche | Date de publication | Membre(s) de la famille de brevet(s) | | Date de publication |
|---|---|---|---|---|
| WO 2022098709 A1 | 12-05-2022 | CN | 116507851 A | 28-07-2023 |
| | | EP | 4241017 A1 | 13-09-2023 |
| | | JP | 2023549313 A | 24-11-2023 |
| | | KR | 20230104154 A | 07-07-2023 |
| | | US | 2022146740 A1 | 12-05-2022 |
| | | WO | 2022098709 A1 | 12-05-2022 |
| EP 3945365 A1 | 02-02-2022 | CN | 114063377 A | 18-02-2022 |
| | | EP | 3945365 A1 | 02-02-2022 |
| | | US | 2022035159 A1 | 03-02-2022 |
| US 2020096779 A1 | 26-03-2020 | CN | 112602008 A | 02-04-2021 |
| | | EP | 3853657 A1 | 28-07-2021 |
| | | JP | 7119235 B2 | 16-08-2022 |
| | | JP | 2022107681 A | 22-07-2022 |
| | | JP | 2022500708 A | 04-01-2022 |
| | | TW | 202024696 A | 01-07-2020 |
| | | US | 2020096779 A1 | 26-03-2020 |
| | | WO | 2020060797 A1 | 26-03-2020 |
| WO 2022120250 A1 | 09-06-2022 | AUCUN | | |

EPO FORM P0460

Pour tout renseignement concernant cette annexe : voir Journal Officiel de l'Office européen des brevets, No.12/82